# EUROPEAN PATENT SPECIFICATION

(11) **EP 3 725 567 B1**
(45) Date of publication and mention of the grant of the patent: **11.12.2024**
(21) Application number: 18888325.0
(22) Date of filing: 17.08.2018
(51) Int. Cl.: B60C 19/08, B60C 15/06, B60C 13/00

(54) **PNEUMATIC TIRE**
LUFTREIFEN
PNEU

(30) Priority: 13.12.2017 JP 2017238968
(43) Date of publication of application: 21.10.2020
(73) Proprietor: Bridgestone Corporation, Chuo-Ku Tokyo 104-8340 (JP)
(72) Inventor: MIURA, Takahiro, Tokyo 104-8340 (JP)
(74) Representative: Marks & Clerk LLP
(86) International application number: PCT/JP2018/030577
(87) International publication number: WO 2019/116636

(56) References cited:
- EP-A1- 1 803 589
- EP-A1- 1 997 653
- EP-A1- 2 014 488
- WO-A1-2013/058092
- WO-A1-2017/122821
- JP-A- 2013 216 115
- JP-A- 2014 125 005
- JP-A- 2014 172 583
- JP-A- 2015 120 445
- JP-A- 2015 120 445
- JP-A- 2015 120 446
- JP-A- 2016 088 303
- US-A1- 2005 103 412
- US-A1- 2014 174 612

## Description

### TECHNICAL FIELD

The present invention relates to a pneumatic tire (hereinafter, also simply referred to as "tire"), particularly a pneumatic radial tire having an improved electrical conductivity.

### BACKGROUND ART

In recent years, with an increasing demand for fuel efficiency of tires, attempts have been made to reduce the rolling resistance of a tire by applying a low-loss rubber composition to the tire. From the standpoint of reducing the rolling resistance of a tire, it is advantageous to apply a low-loss rubber composition to various case members constituting the tire, in addition to a low-loss tread rubber.

Meanwhile, conventionally, as a means for releasing the electricity generated from a vehicle body to the outside, a method of allowing the electricity to escape into the ground via a tire is generally employed. However, further promoting the low loss of a rubber composition used in the tire causes an increase in the electrical resistance of the tire and the electricity is thus not released adequately, which results in, for example, radio noise and generation of static electricity at the time of opening or closing a door of a vehicle. The electrical resistance of a tire can be reduced by using a high-loss member as a part of a tire member; however, this causes problems, such as deterioration of the rolling resistance of the tire.

In this respect, conventionally, various attempts have been made to reduce the electrical resistance of a tire by arranging a conductive member in the tire. For example, Patent Document 1 discloses a pneumatic tire in which: a joint section of a carcass ply, where ends of ply materials are butt-joined or lamination-joined together, is provided with a conductive tape that is interposed between the ends of the ply materials and is exposed on the surface of the carcass ply; a topping rubber of the carcass ply is composed of a non-conductive rubber; a conductive path that extends from a ground-contact surface, which can come into contact with a road surface, to the conductive tape is formed in a tread portion; and an inner liner rubber is composed of a conductive rubber and constitutes a conductive path that extends from an outer surface of a bead portion, which can come into contact with a rim, to the conductive tape exposed on tire inner surface of the carcass ply.

### RELATED ART DOCUMENT

### PATENT DOCUMENT

[Patent Document 1] JP2015-013633A (Claims, etc.)

### SUMMARY OF THE INVENTION

### PROBLEMS TO BE SOLVED BY THE INVENTION

However, a method of arranging a conductive fiber as in Patent Document 1 presents a problem of having major structural limitations and is thus not satisfactory in terms of reducing the electrical resistance of a tire as a whole while aiming for the further achievement of the low loss of a case member of the tire.

In view of the above, an object of the present invention is to provide a pneumatic tire which solves the above-described problems and in which the electrical resistance of the whole tire can be lowered even when the rolling resistance is further reduced by further achieving the low loss of a case member of the tire. Attention is also drawn to the disclosures of WO2017/122821A1, US2014/174612A1, EP1803589A1, EP2014488A1, EP1997653A1, JP2015-120445A and US2005/103412A1.

### MEANS FOR SOLVING THE PROBLEMS

The present inventor intensively studied to discover that the above-described problems can be solved by adopting the below-described constitution, thereby completing the present invention.

That is, the present invention provides a pneumatic tire as claimed in claim 1.

In the tire of the present invention, it is preferred that the first conductive member be exposed on both sides of the rubber chafer in the joint section of the rubber chafer. In the tire of the present invention, it is also preferred that the carcass include a joint section extending in both the tire width direction and the tire radial direction, and that a second conductive member having a volume resistivity of 1 × 10⁸ Ω·cm or lower be arranged in the joint section of the carcass. In this case, it is preferred that the second conductive member be exposed on both sides of the carcass in the joint section of the carcass.

Further, in the tire of the present invention, it is preferred that the first conductive member and the second conductive member be each composed of a rubber member. Still further, in the present invention, the first conductive member and the second conductive member are each preferably in the form of a sheet having a thickness of 0.1 mm or greater. Yet still further, a coating rubber of the carcass, the side rubber, and the rubber chafer can have a volume resistivity of 1 × 10¹⁰ Ω·cm or higher, 1 × 10¹¹ Ω·cm or higher, and 1 × 10⁸ Ω·cm or higher, respectively.

### EFFECTS OF THE INVENTION

According to the present invention, a pneumatic tire in which the electrical resistance of the whole tire can be lowered even when the rolling resistance is further reduced by further achieving the low loss of a case member of the tire can be realized.

### BRIEF DESCRIPTION OF THE DRAWINGS

FIG. 1 is a half widthwise cross-sectional view illustrating one example of a pneumatic tire, which is not according to the present invention, but is useful for understanding the present invention.
FIG. 2 is a cross-sectional view taken along a circumferential direction of a portion where a first conductive member is arranged in a joint section of a side rubber.
FIG. 3 is a half widthwise cross-sectional view illustrating another example of the pneumatic tire, according to the present invention.
FIG. 4 is a cross-sectional view taken along a circumferential direction of a portion where a second conductive member is arranged in a joint section of a carcass.
FIG. 5 is a drawing that illustrates the method used for measuring the electrical resistance value of a tire in Examples.

### MODE FOR CARRYING OUT THE INVENTION

Embodiments of the present invention will now be described in detail referring to the drawings.

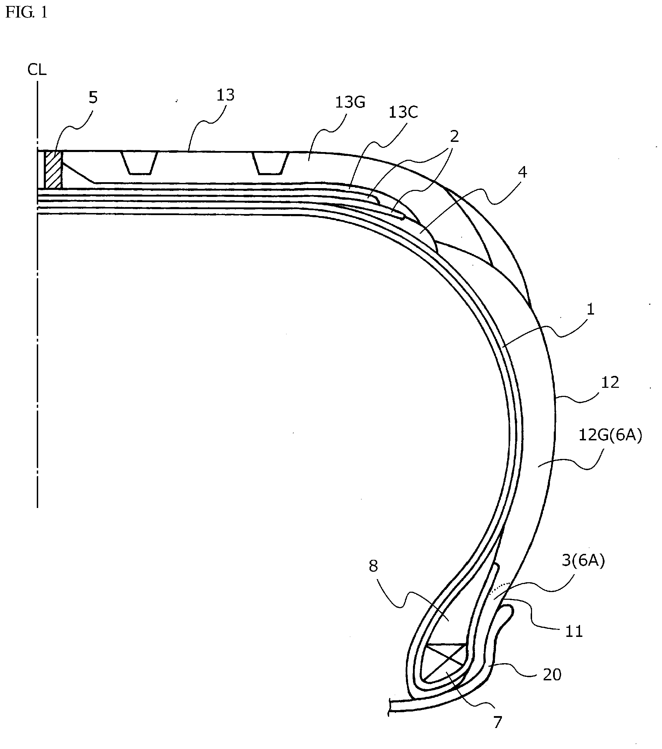

FIG. 1 is a half widthwise cross-sectional view illustrating one example of a pneumatic tire, which is not according to the present invention, but is useful for understanding the present invention. The illustrated pneumatic tire includes: a pair of bead portions 11; a pair of side wall portions 12, which continuously extend on a tire radial-direction outer side from the respective bead portions 11; and a tread portion 13, which extends between the pair of the side wall portions 12 and forms a ground-contact part. The illustrated tire has, as its skeleton, a carcass 1 which is composed of at least one carcass ply (e.g., one to three carcass plies; one carcass ply in the illustrated example) toroidally extending between the pair of the bead portions 11, and includes at least one belt layer 2 (e.g., two to four belt layers 2; two belt layers 2 in the illustrated example) arranged on the tire radial-direction outer side of the carcass 1 in a crown portion.

Further, in the illustrated tire, a side rubber 12 G is arranged on a tire width-direction outer surface of each of the side wall portions 12, and a rubber chafer 3 is arranged on a tire width-direction outer surface of each of the bead portions 11. Still further, on the tire radial-direction outer side of the belt layer 2, a cushion rubber 13C and a tread rubber 13G constituting a ground-contact surface are sequentially arranged, and a belt-end cushion rubber 4 is arranged between the belt layer 2 and the carcass 1 at a tire widthwise end of the belt layer 2. Yet still further, in the illustrated tire, a conductive rubber portion 5, which penetrates through the tread rubber 13G from a ground-contact region of the tire surface toward a tire radial-direction inner side, is arranged. A symbol CL represents the tire equator.

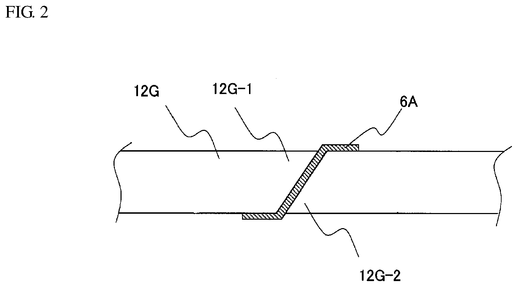

The the side rubber 12G and the rubber chafer 3 each include a joint section extending in the tire radial direction, and a first conductive member 6A having a volume resistivity of 1 × 10⁸ Ω·cm or lower is arranged in at least a part of the joint section of the side rubber 12G and/or that of the rubber chafer 3. FIG. 2 illustrates a cross-sectional view taken along a circumferential direction of a portion where the first conductive member 6A is arranged in the joint section of the side rubber 12G A similar drawing also applies to a case where the first conductive member 6A is arranged in the joint section of the rubber chafer 3, not the side rubber 12G

By arranging the first conductive member 6A in at least a part of the joint section of the side rubber 12G and/or that of the rubber chafer 3, not only a conductive path from a rim 20 to the vicinity of the tread portion 13 can be secured but also the electrical resistance of the whole tire can be lowered while ensuring low fuel consumption performance, even when the rolling resistance is reduced by achieving the low loss of the carcass ply 1 as a case member of the tire, as well as the side rubber 12G, the rubber chafer 3 and the like.

The first conductive member 6A according to the present invention is required to have an electrical resistivity of 1 × 10⁸ Ω·cm or lower, preferably 1 × 10⁷ Ω·cm or lower, and the lower the electrical resistivity, the more preferred it is. When the electrical resistivity of the first conductive member 6A is higher than 1 × 10⁸ Ω·cm, the electrical resistance of the whole tire cannot be sufficiently reduced.

The "joint section of the side rubber 12G" means a portion where ends 12G-1 and 12G-2 of the elongated sheet-form side rubber 12G are joined together by butt-joining or lamination-joining as illustrated in FIG. 2. This joint section extends substantially in the tire radial direction; therefore, as illustrated in the drawing, by inserting the first conductive member 6A between the ends 12G-1 and 12G-2 of the side rubber 12G in the joint section, a conductive path extending substantially in the tire radial direction can be formed at one spot along the tire circumferential direction of the side rubber 12G The same applies to the rubber chafer 3.

Specifically, the low loss of the side rubber 12G can be achieved by arranging the first conductive member 6A in the joint section of the side rubber 12G, while the low loss of the rubber chafer 3 can be achieved by arranging the first conductive member 6A in the joint section of the rubber chafer 3. Further, by arranging the first conductive member 6A in the entirety of the joint sections of the side rubber 12G and the rubber chafer 3, the low loss of both the side rubber 12G and the rubber chafer 3 can be realized.

In the present invention, a coating rubber of the carcass 1 can have a volume resistivity of 1 × 10¹⁰ Ω·cm or higher when the low loss is achieved. Further, the side rubber 12G can have a volume resistivity of 1 × 10¹¹ Ω·cm or higher when the low loss is achieved. Moreover, the rubber chafer 3 can have a volume resistivity of 1 × 10⁸ Ω·cm or higher when the low loss is achieved.

When the first conductive member 6A is arranged in both joint sections of the side rubber 12G and the rubber chafer 3, in order to electrically connect the first conductive members 6A, it is required that the arrangement positions of the first conductive members 6A match with each other along the tire circumferential direction at a junction of the side rubber 12G and the rubber chafer 3.

In this respect, in an actual tire molding process, the side rubber 12G and the rubber chafer 3, which are rubber members constituting the regions from the side wall portions 12 to each bead portion 11, may be joined together and then pasted as an integrated member onto the outer side of the carcass 1. In this case, a joint section is formed by joining the ends of an elongated sheet-form integrated member composed of the side rubber 12G and the rubber chafer 3; therefore, in the resulting joint section, the first conductive member 6A may be arranged as appropriate at a portion corresponding to the side rubber 12G, a portion corresponding to the rubber chafer 3, or a portion corresponding to both of the side rubber 12G and the rubber charger 3.

The first conductive member 6A may be any member as long as it is capable of forming a conductive path, and the arrangement mode thereof is thus not particularly restricted. The first conductive member 6A may take any arrangement mode as long as it is interposed between ends of members in a joint section; however, particularly, it is preferred that the first conductive member 6Abe exposed on both sides of the side rubber 12G and/or the rubber chafer 3 in the joint section. This enables to more certainly secure a conductive path between the rim 20 and other members.

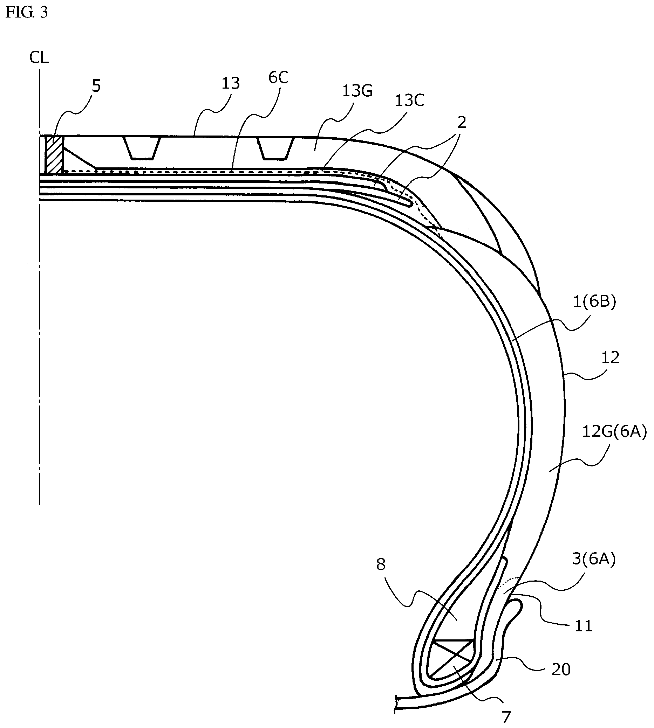

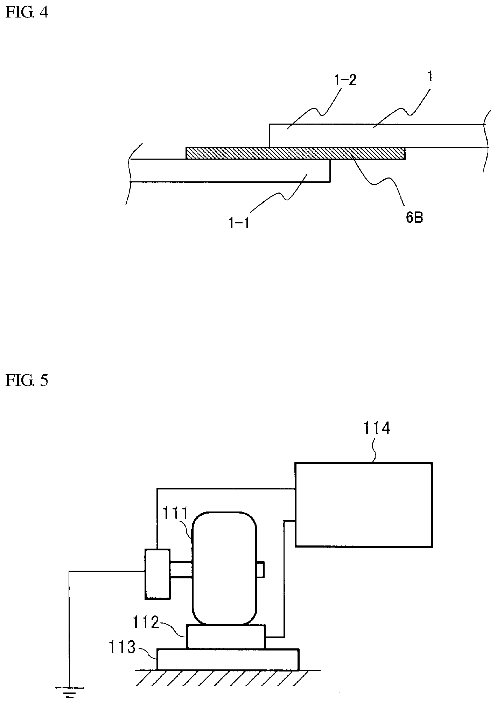

In the present invention, it is preferred that the carcass 1 include a joint section extending in both the tire width direction and the tire radial direction, and that a second conductive member 6B having a volume resistivity of 1 × 10⁸ Ω·cm or lower be arranged in this joint section of the carcass 1. FIG. 3 is a half widthwise cross-sectional view illustrating another example of the pneumatic tire, according to the present invention. FIG. 4 is a cross-sectional view taken along a circumferential direction of the portion where the second conductive member 6B is arranged in the joint section of the carcass 1.

By arranging the second conductive member 6B in the joint section of the carcass 1, not only a conductive path from each bead portion 11 to the tread portion 13 can be secured but also the electrical resistance of the whole tire can be reduced while ensuring low fuel consumption performance, even when the rolling resistance is reduced by achieving the low loss of the carcass 1 as a case member of the tire, as well as the side rubber 12G and the like.

The second conductive member 6B according to the present invention is required to have an electrical resistivity of 1 × 10⁸ Ω·cm or lower, preferably 1 × 10⁷ Ω·cm or lower, and the lower the electrical resistivity, the more preferred it is. When the electrical resistivity of the second conductive member 6B is higher than 1 × 10⁸ Ω·cm, the electrical resistance of the whole tire cannot be sufficiently reduced.

The "joint section of the carcass 1" means a portion where ends 1-1 and 1-2 of the elongated sheet-form carcass 1 are joined together by lamination-joining or buttjoining as illustrated in FIG. 4. This joint section extends substantially in both the tire width direction and the tire radial direction along the arrangement position of the carcass; therefore, as illustrated in the drawing, by inserting the second conductive member 6B between the ends 1-1 and 1-2 of the carcass 1 in the joint section, a conductive path extending substantially in both the tire width direction and the tire radial direction can be formed at one spot along the tire circumferential direction of the carcass 1.

When the second conductive member 6B is arranged in the joint section of the carcass 1, in order to electrically connect the second conductive member 6B and the first conductive member 6A, it is required that the arrangement position of the second conductive member 6B and that of the first conductive member 6A match with each other along the tire circumferential direction.

The second conductive member 6B may be any member as long as it is capable of forming a conductive path, and the arrangement mode thereof is thus not particularly restricted. The second conductive member 6B may take any arrangement mode as long as it is interposed between the ends of the carcass 1 in its joint section; however, particularly, it is preferred that the second conductive member 6B be exposed on both sides of the carcass 1 in the joint section. This enables to more certainly secure a conductive path between both sides of the carcass 1 and other members.

As the first conductive member 6A and the second conductive member 6B, rubber members composed of a rubber composition having a conductive formulation can be preferably used. More specifically, the first conductive member 6A and the second conductive member 6B are each preferably in the form of a sheet having a thickness of 0.1 mm or greater, for example, 0.2 mm to 1.0 mm, more preferably a sheet-form rubber member having the above-described thickness. By this, the first conductive member 6A and the second conductive member 6B can be easily interposed between the ends of the side rubber 12G, the rubber chafer 3 or the carcass 1 in the respective joint sections. When the above-described thickness is less than 0.1 mm, there is a risk that a sufficient electrical connection cannot be secured.

As described above, in the present invention, by using the first conductive member 6A and, preferably, the second conductive member 6B as well, a conductive path extending from the rim 20 to the tread portion 13 can be secured even when the low loss is achieved for the carcass 1, the side rubber 12G and the rubber chafer 3. In the present invention, a conductive path reaching the tire radial-direction inner end of the conductive rubber portion 5 can be secured by using a conductive rubber composition as the belt-end cushion rubber 4, the coating rubber of the belt layer 2, and the cushion rubber 13C. In other words, the first conductive member 6A arranged in the joint section of the side rubber 12G or the second conductive member 6B arranged in the joint section of the carcass 1 can be electrically connected to the conductive rubber portion 5 via the belt-end cushion rubber 4 and the cushion rubber 13C or, when the belt-end cushion rubber 4 is not arranged, the first conductive member 6A or the second conductive member 6B can be electrically connected to the conductive rubber portion 5 via the coating rubber of the belt layer 2 and the cushion rubber 13C.

Further, in the present invention, when low loss is also desired for the coating rubber of the belt layer 2, the belt-end cushion rubber 4 and the cushion rubber 13C, as illustrated in FIG. 3, a third conductive member 6C which electrically connects from the tire radial-direction inner end of the conductive rubber portion 5 to the first conductive member 6A can be arranged. In the example illustrated in FIG. 3, the third conductive member 6C is arranged on the tire radial-direction outer side of the belt layer 2 as a conductive path extending from the tire radial-direction inner end of the conductive rubber portion 5 to the first conductive member 6A. By this, a conductive path can be secured and the electrical resistance of the tire can thus be lowered even when the rolling resistance is reduced by achieving the low loss also for the coating rubber of the belt layer 2, the belt-end cushion rubber 4 and the cushion rubber 13C.

The third conductive member 6C according to the present invention has an electrical resistivity of preferably 1 × 10⁸ Ω·cm or lower, more preferably 1 × 10⁷ Ω·cm or lower, and the lower the electrical resistivity, the more preferred it is. When the electrical resistivity of the third conductive member 6C is higher than 1 × 10⁸ Ω·cm, the electrical resistance of the whole tire cannot be sufficiently reduced.

The third conductive member 6C may be arranged in any manner as long as it electrically connects from the tire radial-direction inner end of the conductive rubber portion 5 to the first conductive member 6A. In the illustrated example, the third conductive member 6C is arranged between the belt layer 2 and the cushion rubber 13C; however, the arrangement is not restricted thereto.

The third conductive member 6C is not particularly restricted; however, it is preferred to use conductive fibers as the third conductive member 6C. The conductive fibers may be arranged between the members in the form of fibers as they are, or in the form of an assembly thereof, such as a woven fabric or a knitted fabric. Specifically, at the time of molding, the conductive fibers may be arranged by being pasted onto the raw rubber surface of any of the members, or may be arranged between the members in the form of a rubber-coated sheet, and the arrangement conditions are not particularly restricted.

In cases where conductive fibers are used as the third conductive member 6C and arranged in the form of fibers as they are, particularly when the belt-end cushion rubber 4 is not arranged or the loss thereof is reduced, in order to electrically connect the third conductive member 6C and the first conductive member 6A, it is required that the arrangement position of at least one of the conductive fibers used as the third conductive member 6C and that of the first conductive member 6A match with each other along the tire circumferential direction.

The resistivity of the conductive fibers in terms of wire resistivity, which is the resistance per unit length, is preferably 1 × 10⁷ Ω/cm or lower, more preferably 1 × 10³ Ω/cm or lower, and the lower the resistivity, the more preferred it is. By controlling the wire resistivity of the conductive fibers to be 1 × 10⁷ Ω/cm or lower, an effect of reducing the electrical resistance of the tire can be favorably obtained.

The conductive fibers may have any structure, and different kinds of conductive fibers may be used in combination. Preferably, as the conductive fibers, composite fibers each having a conductive part and a non-conductive part can be used. Specific examples of the conductive part constituting each conductive fiber include a metal-containing fiber, a carbon-containing fiber and a metal oxide-containing fiber, and any one or more thereof can be used. In the present invention, the "metal-containing fiber" refers to a fiber having a metal content of 5 to 100% by mass, and examples of the metal and the metal oxide include stainless steel, steel, aluminum, copper, and oxides thereof. Further, examples of the non-conductive part include an organic material, such as cotton, nylon, a polyester (e.g., polyethylene terephthalate (PET)) and a polypropylene (PP), and any one or more thereof can be used. Composite fibers composed of such conductive part and non-conductive part exhibit favorable elongation and have excellent adhesiveness; therefore, they are not broken even when a stress is applied thereto in the tire production process or a strain is input thereto during travel of a vehicle, and can thus be preferably used as the conductive fibers.

The mass ratio of the conductive part in each of the conductive fibers used in the present invention is not particularly restricted; however, it is preferably 10% by mass or higher, more preferably 15% by mass or higher, but preferably 90% by mass or lower, more preferably 85% by mass or lower. By incorporating the non-conductive part at such a ratio, favorable elongation of the conductive fibers can be ensured and, by incorporating the conductive part at the above-described ratio, an effect of reducing the electrical resistance of the tire can be favorably obtained, both of which are preferred.

As the conductive fibers in the present invention, specifically, for example, BEKINOX (registered trademark) manufactured by Bekaert Corporation and CLACARBO (registered trademark) KC-500R and KC-793R manufactured by Kuraray Trading Co., Ltd. can be used.

From the standpoint of satisfying the below-described air release performance, electrical conductivity and durability at the same time, the fineness of the conductive fibers is preferably 20 dtex or higher, more preferably 100 dtex or higher, still more preferably 150 dtex or higher, but preferably 3,000 dtex or lower, more preferably 1,000 dtex or lower, still more preferably 600 dtex or lower.

In the present invention, when the conductive fibers are arranged in the form of fibers as they are, the conductive fibers may be arranged linearly, or in a zigzag shape or an undulating shape. Further, in the present invention, a conductive path from the tread portion 13 to each bead portion 11 can be secured as long as the conductive fibers are inclined with respect to the tire circumferential direction, and the conductive fibers are preferably arranged in such a manner to extend in a direction of 60° or larger, particularly 80° or larger, but 120° or smaller, particularly 110° or smaller, with respect to the tire circumferential direction. Particularly, the conductive fibers are arranged in such a manner to extend in the tire width direction. When the conductive fibers are arranged in a zigzag shape or an undulating shape, the direction in which the conductive fibers extend as a whole is defined as the extending direction of the conductive fibers.

In the present invention, the conductive fibers can be arranged in place of bleeder cords that are conventionally arranged for the purpose of removing air during vulcanization. A bleeder cord, which a cord member arranged on one or both sides of a carcass or a belt layer for the purpose of reducing an inflation defect occurring in the tire production process, is generally composed of a cotton yarn or a polyester yarn. The bleeder cord can reduce the occurrence of an inflation defect by absorbing or transmitting the air incorporated into the tire during the tire production process. By replacing some or all of bleeder cords arranged on the carcass with the conductive fibers, an effect attributed to the conductive fibers can be obtained without an addition of a new member. As a matter of course, the expected effects of the present invention can also be obtained by leaving the bleeder cords as they are and additionally arranging the conductive fibers.

When the conductive fibers are arranged in place of conventional bleeder cords, the conductive fibers may replace 10% by mass or more, preferably 20% by mass or more, but 100% by mass or less, preferably 50% by mass or less, of the bleeder cords. The expected effects of the present invention can be certainly obtained by replacing such a number of bleeder cords with the conductive fibers.

The conductive fibers used in the present invention may be either spun yarns or filament yarns, and are preferably spun yarns (blended yarns) obtained by spinning short fibers. In order to ensure adhesion between the conductive fibers and a rubber, it is necessary to perform a dipping treatment, which uses an adhesive agent for ensuring adhesion between organic fibers and a rubber, on the conductive fibers; however, the formation of a surface coating of such an adhesive agent on the conductive fibers by the dipping treatment leads to deterioration of the air release performance through the conductive fibers. Accordingly, when the conductive fibers are arranged in place of bleeder cords, it is preferred to perform the dipping treatment for only a part of each conductive fiber, and it is more preferred not to perform the dipping treatment. Nevertheless, in the absence of a surface coating of an adhesive agent, a small adhesive force between the conductive fibers and an unvulcanized rubber may cause the conductive fibers to fall off during the production. In this case, it is preferred to use spun yarns (blended yarns) since adhesion thereof with a rubber can be ensured because of an anchoring effect of short fibers even without a dipping treatment, and the air release performance can be maintained while securing a conductive path. In the case of using filament yarns, the filament yarns are preferably twisted so as to maintain the air release performance and, in this case, the number of twists is preferably not less than 10 times/10 cm and may be, for example, 30 times/10 cm to 60 times/10 cm.

Meanwhile, when some of the bleeder cords are replaced with the conductive fibers, since the air release performance can be ensured by the remaining bleeder cords composed of cotton yarns, the adhesion with a rubber and the air release performance can both be satisfied even if the conductive fibers have been subjected to a dipping treatment. Therefore, in the present invention, a dipping treatment may be performed on the conductive fibers; however, from the standpoint of securing the degree of freedom in design such as replacement of all bleeder cords with the conductive fibers, a dipping treatment is preferably not performed on the conductive fibers.

From the standpoint of certainly securing a conductive path over the entire tire circumferential direction, it is preferred that at least two conductive fibers be arranged in the whole tire.

In the present invention, as illustrated in the drawings, the conductive rubber portion 5 can usually be arranged in the vicinity of the tire equator CL over the entirety of the tire circumference, at least from the tread ground-contact surface to the tire radial-direction inner surface of the tread rubber 13G In other words, the conductive rubber portion 5 is arranged in such a manner to penetrate the tread rubber 13G from the tread ground-contact surface and forms a conductive path from the road surface to the inside of the tire.

Further, in the present invention, the cushion rubber 13C is a rubber member which can be arranged between the tread rubber 13G and the coating rubber of the belt layer 2 (when a cap layer is arranged, a coating rubber of the cap layer) at least on the tire equator CL. The cushion rubber 13C usually extends to the vicinity of each tire shoulder portion and is covered with the tread rubber 13G and, depending on the arrangement mode, the side rubber 12G as well; therefore, the cushion rubber 13C is a rubber member that is not exposed on the tire outer surface.

In the present invention, what is important is only that a prescribed conductive member is arranged and, this enables to obtain the expected effects of the present invention. Other parts of the tire structure are not particularly restricted and can be configured as appropriate in accordance with a conventional method.

For example, in the illustrated tire, the carcass 1 is folded and rolled up from the tire inner side to the outer side around bead cores 7 each embedded in the pair of the bead portions 11, and a bead filler 8 having a tapering cross-sectional shape is arranged on the tire radial-direction outer side of each bead core 7. Further, although not illustrated in the drawings, in the tire of the present invention, as required, a cap layer covering the entirety of the belt layer 2 and/or a layered layer covering only the end portions of the belt layer 2 may each be arranged in one or more layers on the tire radial-direction outer side of the belt layer 2. The cap layer and the layered layer are each usually formed by winding one or more rubber-coated reinforcing cords substantially in the tire circumferential direction. Moreover, an inner liner is usually arranged on the innermost surface of the tire, although this is not illustrated in the drawings.

### EXAMPLES

The present invention will now be described in more detail by way of Examples thereof.

A pneumatic tire having a tire size of 195/65R15, which had a carcass composed of a single carcass ply toroidally extending between a pair of bead portions as a skeleton and included two belt layers and a tread rubber that were sequentially arranged on the tire radial-direction outer side of the carcass in a crown portion, and in which a side rubber was arranged on the tire width-direction outer surfaces of side wall portions and a rubber chafer was arranged on the tire width-direction outer surfaces of the bead portions, was produced. In this pneumatic tire, a conductive rubber portion was arranged in a tread portion in such a manner to penetrate through the tread rubber from a ground-contact region of the tire surface toward the tire radial-direction inner side.

Pneumatic tires of Conventional Examples, Examples and Comparative Examples were produced by arranging a first conductive member as shown in the tables below and modifying the volume resistivity values of the tread rubber, the conductive rubber portion, the side rubber, the rubber chafer and the carcass coating rubber as shown in the tables below. A rubber sheet was used as the first conductive member. Further, a silica-containing rubber composition was used as the tread rubber. When the electrical resistance value of a member is lower than 1.0 × 10⁸ Ω·cm, the member is said to be electrically conductive. A conductive path from the first conductive member, second conductive member or side rubber to the conductive rubber portion was secured by a conductive belt not reduced in loss, or when a low-loss non-conductive belt was used, the conductive path was secured by arranging a conductive rubber sheet or conductive fibers via the upper surface of the belt. As the second conductive member, a rubber sheet was used. As a third conductive member, BEKINOX (registered trademark, polyester-metal fiber blended yarn) manufactured by Bekaert Corporation, which is a conductive fiber having a wire resistivity of 50 Ω/cm and a fiber diameter of 400 dtex, was used.

For each of the thus obtained test tires, the electrical resistance value was evaluated as described below. The results thereof are shown in the tables below.

### (Electrical Resistance Value)

As illustrated in FIG. 5, the electrical resistance value of each tire was measured in accordance with WdK 110 sheet 3 of GERMAN ASSOCIATION OF RUBBER INDUSTRY using a model HP4394AHigh Resistance Meter manufactured by Hewlett-Packard Company. In FIG. 5, symbols 111, 112, 113 and 114 represent the tire, a steel sheet, an insulator and the high resistance meter, respectively, and the measurement was performed by applying an electric current of 1,000 V between the steel sheet 112 on the insulator 113 and the rim of the tire 111.

The smaller the electrical resistance value of the tire, the more favorable it is.

### (Rolling Resistance)

The rolling resistance of each tire was measured in accordance with SAE J1269 using a rolling resistance tester. The results thereof are presented below as index values based on Conventional Example 1. A larger numerical value indicates more favorable rolling resistance performance.

The results of the above measurements are shown together in the tables below.

**[Table 1]**

| | Conventional Example 1 | Conventional Example 2 | Example 1 | Example 2 | Example 3 |
|---|---|---|---|---|---|
| Volume resistivity of tread rubber (Ω·cm) | 8.0 × 10⁹ | 8.0 × 10⁹ | 8.0 × 10⁹ | 8.0 × 10⁹ | 8.0 × 10⁹ |
| Volume resistivity of conductive rubber portion in crown portion (Ω·cm) | 4.0 × 10⁵ | 4.0 × 10⁵ | 4.0 × 10⁵ | 4.0 × 10⁵ | 4.0 × 10⁵ |
| Volume resistivity of side rubber (Ω·cm) | 7.0 × 10¹² | 7.0 × 10¹² | 7.0 × 10¹² | 1.0 × 10⁷ | 7.0 × 10¹² |
| Volume resistivity of rubber chafer (Ω·cm) | 5.0 × 10⁹ | 7.0 × 10⁶ | 5.0 × 10⁹ | 5.0 × 10⁹ | 7.0 × 10⁶ |
| Volume resistivity of carcass coating rubber (Ω·cm) | 7.0 × 10¹¹ | 7.0 × 10¹¹ | 7.0 × 10¹¹ | 7.0 × 10¹¹ | 7.0 × 10¹¹ |
| Volume resistivity of first conductive member (Ω·cm) | - | - | 1.0 × 10⁷ | 1.0 × 10⁷ | 1.0 × 10⁷ |
| Thickness of first conductive member (mm) | - | - | 0.6 | 0.5 | 0.5 |
| Arrangement position of first conductive member | none | none | side rubber and rubber chafer*¹ | rubber chafer*² | side rubber*³ |
| Presence or absence of exposure of first conductive member on respective surfaces of side rubber and/or rubber chafer *⁵ | - | - | exposed | exposed | exposed |
| Tire electrical resistance (Ω) | 5.0 × 10⁹ | 3.0 × 10⁹ | 3.0 × 10⁷ | 9.0 × 10⁶ | 1.0 × 10⁷ |
| Tire rolling resistance (index) | 100 | 101 | 100 | 106 | 102 |
| Assessment (< 1.0 × 10⁹) | NG | NG | OK | OK | OK |

| | | | | | |
|---|---|---|---|---|---|
| *¹⁾ A configuration in which the first conductive member was arranged in the entire joint sections of the side rubber and the rubber chafer. *²⁾ A configuration in which the first conductive member was arranged in the entire joint section of the rubber chafer. *³⁾ A configuration in which the first conductive member was arranged in the entire joint section of the side rubber. *⁵⁾ This indicates the presence or absence of exposure of the first conductive member on the respective surfaces of the side rubber and/or the rubber chafer in the joint section of the side rubber and/or that of the rubber chafer. | | | | | |

**[Table 2]**

| | Example 4 | Example 5 | Example 6 | Example 7 | Example 8 | Example 9 | Comparative Example 1 |
|---|---|---|---|---|---|---|---|
| Volume resistivity of tread rubber (Ω·cm) | 8.0 × 10⁹ | 8.0 × 10⁹ | 8.0 × 10⁹ | 8.0 × 10⁹ | 8.0 × 10⁹ | 8.0 × 10⁹ | 8.0 × 10⁹ |
| Volume resistivity of conductive rubber portion in crown portion (Ω·cm) | 4.0 × 10⁵ | 4.0 × 10⁵ | 4.0 × 10⁵ | 4.0 × 10⁵ | 4.0 × 10⁵ | 4.0 × 10⁵ | 4.0 × 10⁵ |
| Volume resistivity of side rubber (Ω·cm) | 1.0 × 10⁷ | 7.0 × 10¹² | 7.0 × 10¹² | 7.0 × 10¹² | 7.0 × 10¹² | 7.0 × 10¹² | 7.0 × 10¹² |
| Volume resistivity of rubber chafer (Ω·cm) | 5.0 × 10⁹ | 5.0 × 10⁹ | 5.0 × 10⁹ | 5.0 × 10⁹ | 5.0 × 10⁹ | 5.0 × 10⁹ | 5.0 × 10⁹ |
| Volume resistivity of carcass coating rubber (Ω·cm) | 7.0 × 10¹¹ | 7.0 × 10¹¹ | 7.0 × 10¹¹ | 7.0 × 10¹¹ | 7.0 × 10¹¹ | 7.0 × 10¹¹ | 7.0 × 10¹¹ |
| Volume resistivity of first conductive member (Ω·cm) | 1.0 × 10⁷ | 1.0 × 10⁷ | 1.0 × 10⁷ | 1.0 × 10⁷ | 1.0 × 10⁷ | 1.0 × 10⁷ | 3.0 × 10⁸ |
| Thickness of first conductive member (mm) | 0.1 | 0.1 | 0.6 | 0.6 | 0.6 | 0.6 | 0.6 |
| Arrangement position of first conductive member | side rubber and rubber chafer*¹ | side rubber and rubber chafer*¹ | side rubber and rubber chafer*¹ | side rubber and rubber chafer*¹ | side rubber and rubber chafer*¹ | side rubber and rubber chafer*¹ | side rubber and rubber chafer*¹ |
| Presence or absence of exposure of first conductive member on respective surfaces of side rubber and/or rubber chafer*⁵ | present | absent | present | present | present | present | present |
| Volume resistivity of second conductive member (Ω·cm) | - | - | 1.0 × 10⁷ | 1.0 × 10⁷ | - | 1.0 × 10⁷ | - |
| Thickness of second conductive member (mm) | - | - | 0.5 | 0.5 | - | 0.5 | - |
| Arrangement position of second conductive member*⁴⁾ | - | - | not exposed | exposed | - | exposed | - |
| Volume resistivity of third conductive member (Ω·cm) | - | - | - | - | 1.0 × 10⁷ | 1.0 × 10⁷ | - |
| Tire electrical resistance (Ω) | 7.0 × 10⁷ | 1.0 × 10⁸ | 2.0 × 10⁷ | 1.0 × 10⁷ | 2.0 × 10⁷ | 9.5 × 10⁶ | 2.0 × 10⁹ |
| Tire rolling resistance (index) | 105 | 100 | 100 | 100 | 100 | 100 | 100 |
| Assessment (< 1.0 × 10⁹) | OK | OK | OK | OK | OK | OK | NG |

| | | | | | | | |
|---|---|---|---|---|---|---|---|
| *⁴⁾ This indicates the presence or absence of exposure of the second conductive member on respective surfaces of the carcass in the joint section. | | | | | | | |

As shown in the tables above, in Examples where a prescribed conductive member(s) was/were arranged in the joint section of the side rubber and/or that of the rubber chafer, it was confirmed that a conductive path in each tire was secured and an increase in the electrical resistance of the tire was inhibited even when the low loss was avhieved for the tread rubber, the side rubber, the rubber chafer and the carcass coating rubber.

On the other hand, in Conventional Example 1, the antistatic performance of the tire was insufficient due to the high volume resistivity of the tread rubber, the side rubber, the rubber chafer and the carcass coating rubber. In addition, in Conventional Example 2, although the rubber chafer had a low electrical resistance, the antistatic performance was also insufficient due to the high electrical resistance of other members, such as the tread rubber, the side rubber and the carcass coating rubber. Moreover, in Comparative Example 1, a sufficient antistatic performance could not be imparted to the tire due to the high volume resistivity of the first conductive member.

### DESCRIPTION OF SYMBOLS

1: carcass
1-1, 1-2: ends of carcass
2: belt layer
3: rubber chafer
4: belt-end cushion rubber
5: conductive rubber portion
6A: first conductive member
6B: second conductive member
6C: third conductive member
7: bead core
8: bead filler
11: bead portion
12: side wall portion
12G: side rubber
12G-1, 12G-2: ends of side rubber
13: tread portion
13G: tread rubber
13C: cushion rubber
20: rim
111: tire
112: steel sheet
113: insulator
114: high resistance meter

## Claims

1. A pneumatic tire (111) comprising:
a pair of bead portions (11);
a pair of side wall portions (12); and
a tread portion (13) extending between the pair of the side wall portions,
in which pneumatic tire a carcass (1) that is composed of at least one carcass ply toroidally extending between the pair of the bead portions is used as a skeleton, a side rubber (12G) is arranged on a tire width-direction outer surface of each of the side wall portions, and a rubber chafer (3) is arranged on a tire width-direction outer surface of each of the bead portions,
wherein
the side rubber and the rubber chafer each comprise a joint section extending in a tire radial direction, and
a first conductive member (6A) having a volume resistivity of 1 × 10⁸ Ω·cm or lower is arranged in at least a part of the joint section of the rubber chafer,
wherein the pneumatic tire further comprises:
a tread rubber (13G) arranged on a tire radial-direction outer side of the carcass in a crown portion; and a conductive rubber portion (5) arranged in such a manner to penetrate through the tread rubber from a ground-contact region of a tire surface toward a tire radial-direction inner side, and **characterized in that**
the pneumatic tire further comprises a
third conductive member (6C) arranged to electrically connect from a tire radial-direction inner end of the conductive rubber portion to the first conductive member and **in that**
conductive fibers are used as the third conductive member

2. The pneumatic tire according to claim 1, wherein the first conductive member is exposed on both sides of the rubber chafer in the joint section of the rubber chafer.

3. The pneumatic tire according to claim 1 or 2, wherein
the carcass comprises a joint section extending in both the tire width direction and the tire radial direction, and
a second conductive member (6B) having a volume resistivity of 1 × 10⁸ Ω·cm or lower is arranged in the joint section of the carcass.

4. The pneumatic tire according to claim 3, wherein the second conductive member is exposed on both sides of the carcass in the joint section of the carcass.

5. The pneumatic tire according to claim 3 or 4, wherein the first conductive member and the second conductive member are each composed of a rubber member.

6. The pneumatic tire according to any one of claims 3 to 5, wherein the first conductive member and the second conductive member are each in the form of a sheet having a thickness of 0.1 mm or greater.

7. The pneumatic tire according to any one of claims 1 to 6, wherein a coating rubber of the carcass has a volume resistivity of 1 × 10¹⁰ Ω·cm or higher.

8. The pneumatic tire according to any one of claims 1 to 7, wherein the side rubber has a volume resistivity of 1 × 10¹¹ Ω·cm or higher.

9. The pneumatic tire according to any one of claims 1 to 8, wherein the rubber chafer has a volume resistivity of 1 × 10⁸ Ω·cm or higher.

## Patentansprüche

1. Luftreifen (111), der Folgendes umfasst:
ein Paar von Wulstabschnitten (11);
ein Paar von Seitenwandabschnitten (12); und
einen Laufflächenabschnitt (13), der sich zwischen dem Paar der Seitenwandabschnitte erstreckt,
in dem Luftreifen, eine Karkasse (1), die aus mindestens einer Karkassenlage besteht, die sich kreisringförmig zwischen dem Paar der Wulstabschnitte erstreckt, als ein Skelett verwendet wird, ein Seitengummi (12G) auf einer in Reifenbreitenrichtung äußeren Fläche jedes der Seitenwandabschnitte angeordnet ist, und ein Gummi-Wulstschutzband (3) auf einer in Reifenbreitenrichtung äußeren Fläche jedes der Wulstabschnitte angeordnet ist,
wobei
der Seitengummi und das Gummi-Wulstschutzband jeweils eine Verbindungssektion umfassen, die sich in einer Reifenradialrichtung erstreckt, und
ein erstes leitfähiges Element (6A), das einen spezifischen Durchgangswiderstand von 1 × 10⁸ Ω·cm oder niedriger aufweist, in mindestens einem Teil der Verbindungssektion des Gummi-Wulstschutzbandes angeordnet ist,
wobei der Luftreifen ferner Folgendes umfasst:
einen Laufflächengummi (13G), der auf einer in Reifenradialrichtung äußeren Seite der Karkasse in einem Scheitelabschnitt angeordnet ist; und einen leitfähigen Gummiabschnitt (5), der auf eine solche Weise angeordnet ist, dass er den Laufflächengummi von einem Bodenberührungsbereich einer Reifenoberfläche hin zu einer in Reifenradialrichtung inneren Seite durchdringt, und **dadurch gekennzeichnet, dass**
der Luftreifen ferner ein drittes leitfähiges Element (6C) umfasst, das angeordnet ist, um von einem in Reifenradialrichtung inneren Ende des leitfähigen Gummiabschnitts bis zu dem ersten leitfähigen Element elektrisch zu verbinden, und dadurch, dass
leitfähige Fasern als das dritte leitfähige Element verwendet werden.

2. Luftreifen nach Anspruch 1, wobei das erste leitfähige Element auf beiden Seiten des Gummi-Wulstschutzbandes in der Verbindungssektion des Gummi-Wulstschutzbandes freigelegt ist.

3. Luftreifen nach Anspruch 1 oder 2, wobei
die Karkasse eine Verbindungssektion umfasst, die sich in sowohl der Reifenbreitenrichtung als auch der Reifenradialrichtung erstreckt, und
ein zweites leitfähiges Element (6B), das einen spezifischen Durchgangswiderstand von 1 × 10⁸ Ω·cm oder niedriger aufweist, in der Verbindungssektion der Karkasse angeordnet ist.

4. Luftreifen nach Anspruch 3, wobei das zweite leitfähige Element auf beiden Seiten der Karkasse in der Verbindungssektion der Karkasse freigelegt ist.

5. Luftreifen nach Anspruch 3 oder 4, wobei das erste leitfähige Element und das zweite leitfähige Element jeweils aus einem Gummielement bestehen.

6. Luftreifen nach einem der Ansprüche 3 bis 5, wobei das erste leitfähige Element und das zweite leitfähige Element jeweils in der Form einer Bahn vorliegen, die eine Dicke von 0,1 mm oder größer aufweist.

7. Luftreifen nach einem der Ansprüche 1 bis 6, wobei ein Überzugsgummi der Karkasse einen spezifischen Durchgangswiderstand von 1 × 10¹⁰ Ω·cm oder höher aufweist.

8. Luftreifen nach einem der Ansprüche 1 bis 7, wobei der Seitengummi einen spezifischen Durchgangswiderstand von 1 × 10¹¹ Ω·cm oder höher aufweist.

9. Luftreifen nach einem der Ansprüche 1 bis 8, wobei das Gummi-Wulstschutzband einen spezifischen Durchgangswiderstand von 1 × 10⁸ Ω·cm oder höher aufweist.

## Revendications

1. Bandage pneumatique (111), comprenant :
une paire de parties de talon (11) ;
une paire de parties de flanc (12) ; et
une partie de bande de roulement (13) s'étendant entre la paire de parties de flanc,
dans le bandage pneumatique, une carcasse (1) qui est composée d'au moins une nappe de carcasse s'étendant toroïdalement entre la paire des parties de talon est utilisée comme squelette, une gomme latérale (12G) est agencée sur une surface externe, dans la direction de la largeur du pneumatique, de chacune des parties de flanc, et une bandelette-talon de gomme (3) est agencée sur une surface externe, dans la direction de la largeur du pneumatique, de chacune des parties de talon,
dans lequel
la gomme latérale et la bandelette-talon de gomme comprennent chacune une section de jonction s'étendant dans la direction radiale du pneumatique, et
un premier élément conducteur (6A) ayant une résistivité volumique de 1 × 10⁸ Ω·cm ou moins est agencé dans au moins une partie de la section de jonction de la bandelette-talon de gomme,
dans lequel le bandage pneumatique comprend en outre :
une gomme de bande de roulement (13G) agencée sur un côté externe, dans la direction radiale du pneumatique, de la carcasse, dans une partie de sommet ; et une partie de gomme conductrice (5) agencée de sorte à pénétrer à travers la gomme de bande de roulement, d'une région de contact au sol d'une surface de pneumatique vers un côté interne, dans la direction radiale du pneumatique, et **caractérisé en ce que**
le bandage pneumatique comprend en outre un troisième élément conducteur (6C) agencée pour assurer la connexion électrique, d'une extrémité interne, dans la direction radiale du pneumatique, de la partie de gomme conductrice vers le premier élément conducteur, et **en ce que**
des fibres conductrices sont utilisées comme troisième élément conducteur.

2. Bandage pneumatique selon la revendication 1, dans lequel le premier élément conducteur est exposé sur les deux côtés de la bandelette-talon de gomme dans la section de jonction de la bandelette-talon de gomme.

3. Bandage pneumatique selon la revendication 1 ou 2, dans lequel
la carcasse comprend une section de jonction s'étendant à la fois dans la direction de la largeur du pneumatique et dans la direction radiale du pneumatique, et
un deuxième élément conducteur (6B) ayant une résistivité volumique de 1 × 10⁸ Ω·cm ou moins est agencé dans la section de jonction de la carcasse.

4. Bandage pneumatique selon la revendication 3, dans lequel le deuxième élément conducteur est exposé sur les deux côtés de la carcasse dans la section de jonction de la carcasse.

5. Bandage pneumatique selon la revendication 3 ou 4, dans lequel le premier élément conducteur et le deuxième élément conducteur sont chacun composés d'un élément de gomme.

6. Bandage pneumatique selon l'une quelconque des revendications 3 à 5, dans lequel le premier élément conducteur et le deuxième élément conducteur ont chacun la forme d'une feuille ayant une épaisseur de 0,1 mm ou plus.

7. Bandage pneumatique selon l'une quelconque des revendications 1 à 6, dans lequel une gomme de revêtement de la carcasse présente une résistivité volumique de 1 × 10¹⁰ Ω·cm ou plus.

8. Bandage pneumatique selon l'une quelconque des revendications 1 à 7, dans lequel la gomme latérale présente une résistivité volumique de 1 × 10¹¹ Ω·cm ou plus.

9. Bandage pneumatique selon l'une quelconque des revendications 1 à 8, dans lequel la bandelette-talon de gomme présente une résistivité volumique de 1 × 10⁸ Ω·cm ou plus.
